# FASCICULE DE BREVET EUROPEEN

(11) **EP 0 494 804 B1**
(45) Date de publication et mention de la délivrance du brevet: **01.03.1995**
(21) Numéro de dépôt: 92400008.6
(22) Date de dépôt: 03.01.1992
(51) Int. Cl.: B25J 21/00, B25J 19/00, B25J 9/00, B05B 13/04

(54) **Robot notamment de lavage**
Roboter, z.B. zum reinigen
Robot, e.g. for cleaning

(30) Priorité: 07.01.1991 FR 9100118
(43) Date de publication de la demande: 15.07.1992
(73) Titulaire: ETUDES TECHNIQUES-FRANCHE COMTE-ALSACE ETFA Sàrl, F-90000 Belfort (FR)
(72) Inventeur: Baills, Jean-Michel, F-90700 Chatenois les Forges (FR)
(74) Mandataire: Armengaud Ainé, Alain

(56) Documents cités:
- EP-A- 0 255 612
- DE-A- 3 817 833
- FR-A- 2 085 185
- FR-A- 2 526 339
- FR-A- 2 593 088
- GB-A- 2 225 767
- JP-A-60 006 394
- US-A- 3 482 711
- US-A- 4 228 958

## Description

La présente invention concerne un robot destiné à exécuter des tâches diverses, telles que notamment le lavage de pièces dans une enceinte.

Il existe à l'heure actuelle des robots permettant de réaliser un certain nombre de fonctions. Jusqu'à présent, il n'a pas été possible d'utiliser, de façon fiable et efficace de tels robots pour réaliser notamment le lavage de pièces dans des enceintes fermées compte tenu en particulier des difficultés dues aux problèmes de l'étanchéité. C'est la raison pour laquelle ces opérations de lavage de pièces sont généralement réalisées dans des tunnels de lavage à l'aide d'installations fixes de projection et de pulvérisation de liquide de lavage. Une telle solution présente peu de souplesse compte tenu du fait qu'il est nécessaire de modifier les dispositifs de projection de liquide de lavage en fonction des différents types de pièces devant être traités. La présente invention s'est donc fixée pour objectif d'apporter un robot permettant notamment d'exécuter des opérations de lavage de pièces quelles que soient les formes, configurations et dimensions de ces dernières.

On connaît l'existence de robots (cf. GB-A- 2 225 767 et FR-A-2 085 185) destinés à la manutention de pièces utilisant des asservissements pour le contrôle de positions selon trois axes de la charge. Ainsi, le brevet FR-A-2 085 185 décrit un robot conforme au préambule de la revendication 1.

Le brevet US-4 228 958 vise un système de buses permettant la pulvérisation d'un liquide, ledit système étant disposé à l'extrémité d'un bras de robot.

Ces systèmes s'organisent en général autour de deux mouvements de translation (longitudinale et transversale) combinés à un mouvement de rotation autour du troisième axe. Mais ils ne permettent pas de réaliser et d'assurer un ensemble de mouvements combinés associant rotation et translation autour d'un ou plusieurs axes, cette combinaison se rencontrant très couramment pour des robots destinés au lavage de pièces.

En conséquence, la présente invention a pour objet un robot tel que décrit dans la revendication 1.

Selon une caractéristique de la présente invention, ledit arbre comporte une partie télescopique à l'extrémité de laquelle est montée ladite tête.

Selon une autre caractéristique de l'invention, et notamment dans l' application visée, le lavage de pièces, l'étanchéité entre le chariot supportant l'arbre et la partie inférieure dudit arbre munie des buses de pulvérisation est assurée à l'aide d'un rideau de tôles coulissantes.

D'autres caractéristiques et avantages de la présente invention ressortiront de la description faite ci-après en référence aux dessins annexés qui en illustrent un exemple de réalisation. Sur les dessins :
- la figure 1 est une vue schématique en élévation latérale représentant un robot selon l'invention appliqué au lavage de pièces;
- la figure 2 est une vue en élévation frontale de la figure 1 et;
- la figure 3 est une vue en plan de la figure 1.

Dans la description faite ci-après, on se réfère à une application de l'invention visant le lavage de pièces. Il demeure bien entendu qu'il ne s'agit là que d'un exemple d'application, le robot objet de la présente invention pouvant être utilisé à d'autres fins (notamment manipulation et autres), par un simple changement de sa tête.

En se référant aux dessins, on y voit en partie supérieure le robot selon la présente invention, qui est monté sur un bâti positionné au-dessus d'une enceinte ou chambre 10 dans laquelle sont placées les pièces à traiter (non représentées sur le dessin). Dans cet exemple d'application, cette enceinte est une chambre de lavage.

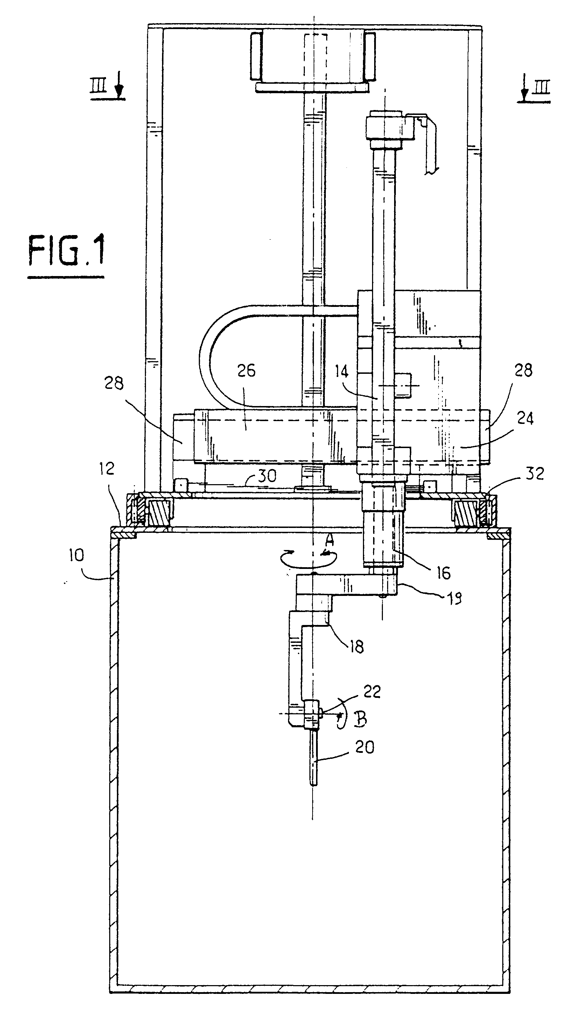

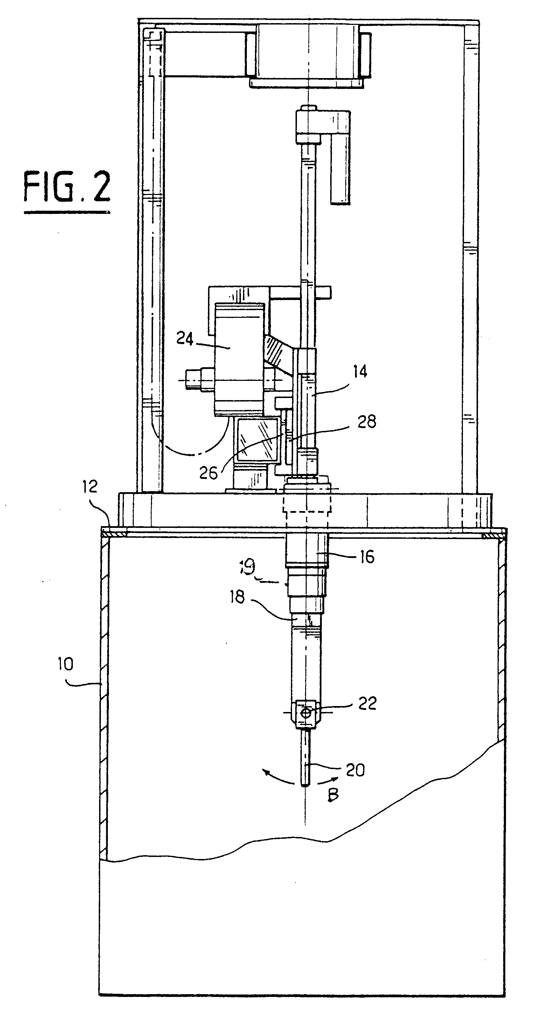

Le robot comporte un arbre 14 dont l'extrémité inférieure est munie d'une partie télescopique 16 à l'extrémité de laquelle est prévue la tête 20 de ce robot. Dans cet exemple de réalisation, la tête 20 est une tête de pulvérisation d'un liquide de lavage comportant à son extrémité au moins une buse de pulvérisation et cette tête 20 est montée sur un bras 18 porté par un support 19 et pouvant tourner selon la flèche A autour de l'axe vertical de la tête comme indiqué sur la figure 1 . En outre, la tête 20 est montée à l'extrémité du bras 18 par l'intermédiaire d'un axe 22 de façon à pouvoir tourner autour d'un axe horizontal comme indiqué par la flèche B sur les figures 1 et 2. Par conséquent, cette tête peut tourner par rapport à cet axe, comme indiqué par la flèche sur la figure 1. L'arbre 14 est creux de manière à assurer l'alimentation de la tête 20 en liquide de lavage. Cet arbre 14 est animé d'un mouvement de translation verticale alternatif par tout moyen approprié, par exemple à l'aide d'un système pignon-crémaillère (non représenté) entraîné par un moteur pouvant être asservi par exemple par un système à commande numérique.

L'arbre 14 est monté sur un chariot 24 qui peut se déplacer transversalement le long d'une voie de guidage 28 qui est fixée sur la partie supérieure d'une tourelle circulaire rotative 32, selon un diamètre de cette tourelle. Le chariot 24 est entraîné d'un mouvement de translation horizontale le long de la voie de guidage 28 par un moteur asservi par exemple par un système à commande numérique et la tourelle circulaire 32 montée sur la surface supérieure 12 de l'enceinte de traitement 10, comporte, selon une disposition classique, une couronne dentée circulaire 31 qui est entraînée par un système de pignons 33 par l'intermédiaire d'un moteur 34 également asservi par exemple par un système à commande numérique.

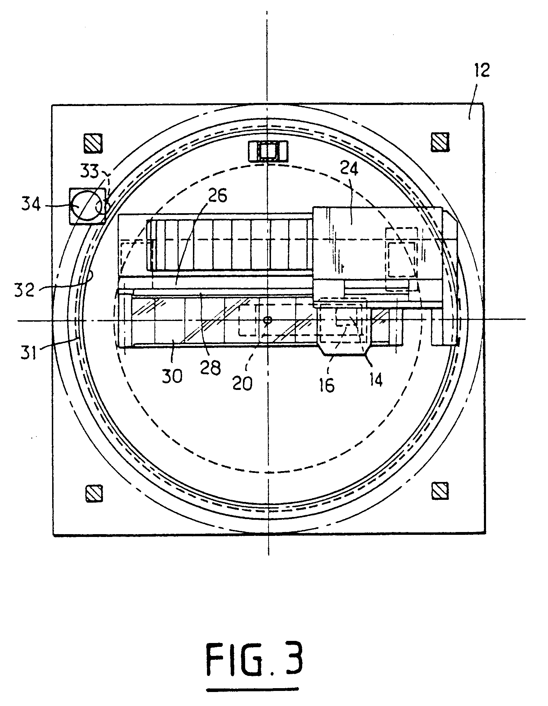

On comprend que la tête 20 peut être déplacée selon les axes d'un système de coordonnées polaires :
- mouvement alternatif montée/descente de l'arbre 14 portant la tête 20 ;
- mouvement de rotation de cette tête 20 autour de son axe 22;
- mouvement de translation alternative horizontale du chariot 24 le long de la voie de guidage 28 prévue diamétralement sur la tourelle 32 ;
- mouvement de rotation de la tourelle 32 autour de son centre, comme indiqué sur la figure 3.

Ainsi, la tête 20 peut être déplacée dans l'enceinte 10 en tout emplacement du volume de cette dernière, ce qui permet, dans cet exemple particulier d'application de nettoyer par lavage n'importe quelle partie d'une pièce quelle que soit la forme, configuration ou dimension de cette dernière, sans qu'il soit nécessaire de modifier l'installation pour traiter d'autres types de pièces.

Pour assurer l'étanchéité entre le robot proprement dit et l'enceinte 10 recevant les pièces à laver, on prévoit un système classique de rideaux à tôles coulissantes représentées de façon schématique en 30 sur la figure 3 qui vient obturer la surface située sous le chariot 24 au fur et à mesure que ce chariot se déplace sur sa voie de guidage 28.

L'alimentation en énergie électrique des moteurs assurant les différents mouvements de la tête 20 du robot selon l'invention s'effectue de façon classique à l'aide de câbles blindés souples et la même solution peut être adoptée en ce qui concerne l'alimentation en liquide de lavage de l'arbre creux 14.

## Revendications

1. Robot pour traitement de pièces et pour leur lavage, comportant un arbre creux (14) positionné verticalement au travers d'une enceinte (10) recevant des pièces, et une tête (20) montée à l'extrémité de l'arbre creux (14), caractérisé en ce qu'il comprend une tourelle circulaire (32) entraînée en rotation, montée au-dessus de l'enceinte (10) recevant les pièces à traiter ; l'arbre creux (14) permettant l'alimentation en liquide jusqu'à un organe de lavage disposé en bout d'arbre, l'arbre creux (14) étant positionné verticalement par l'intermédiaire d'un chariot (24) disposé sur ladite tourelle circulaire, ledit arbre creux (14) étant animé d'un mouvement de translation verticale alternatif; ledit chariot (24) supportant ledit arbre (14) pouvant se déplacer sur une voie de guidage (28) prévue diamétralement sur ladite tourelle circulaire; la tête (20) étant munie de moyens de traitement desdites pièces, ces moyens étant constitués par une ou plusieurs buses de pulvérisation orientables.

2. Robot selon la revendication 1, caractérisé en ce que ledit arbre (14) comporte une partie télescopique (16) à l'extrémité de laquelle est montée ladite tête.

3. Robot selon l'une des revendications 1 ou 2, caractérisé en ce que lesdites buses sont montées à l'extrémité de la tête par l'intermédiaire d'un bras rotatif (18).

4. Robot selon l'une quelconque des revendications précédentes, caractérisé en ce que ledit bras (18) est porté par un support (19) et peut tourner autour d'un axe vertical.

5. Robot selon l'une quelconque des revendications précédentes, caractérisé en ce que la tête (20) est montée à l'extrémité dudit bras (18) par l'intermédiaire d'un axe (22) de façon à pouvoir tourner selon un mouvement de rotation suivant un axe horizontal.

6. Robot selon l'une quelconque des revendications précédentes, caractérisé en ce que l'étanchéité entre le chariot (24) supportant l'arbre (14) et la partie inférieure de cet arbre munie de la tête (20) est assurée à l'aide d'un rideau de tôles coulissantes.

## Claims

1. Robot for treating components and washing them, comprising a hollow shaft (14) positioned vertically through an enclosure (10) receiving components, and a head (20) mounted at the end of the hollow shaft (14), characterized in that it comprises a rotationally driven circular turret (32), mounted above the enclosure (10) receiving the components to be treated; the hollow shaft (14) making possible the feed of liquid to a washing element disposed at the end of the shaft, the hollow shaft (14) being positioned vertically by means of a carriage (24) disposed on said circular turret, said hollow shaft (14) being given an alternating vertical translatory movement; said carriage (24) supporting said shaft (14) being capable of displacing along a guide path (28) provided diametrally on said circular turret; the head (20) being provided with means for the treatment of said components, these means being constituted of one or more orientatable spray nozzles.

2. Robot according to Claim 1, characterized in that said shaft (14) comprises a telescopic part (16), at the end of which said head is mounted.

3. Robot according to one of Claims 1 or 2, characterized in that said nozzles are mounted at the end of the head by means of a rotary arm (18).

4. Robot according to any one of the preceding Claims, characterized in that said arm (18) is carried by a support (19) and can rotate about a vertical axis.

5. Robot according to any one of the preceding Claims, characterized in that the head (20) is mounted at the end of said arm (18) by means of an axis (22) in such a way that it can rotate in a rotary movement about a horizontal axis.

6. Robot according to any one of the preceding Claims, characterized in that the seal between the carriage (24) supporting the shaft (14) and the lower part of this shaft provided with the head (20) is assured by a curtain of sliding plates.

## Patentansprüche

1. Ein Roboter für die Behandlung von Werkstücken, insbesonsere deren Wäsche, bestehend aus einer Hohlwelle (14) vertikal in einem Gefäß (10) positioniert, welches die Werkstücke aufnimmt, und einem Kopf (20), montiert an einem Ende der Hohlwelle (14), **dadurch gekennzeichnet, daß** er einen kreisförmigen Aufbau (32) umfaßt, der in Rotation versetzt wird, montiert oberhalb des Gefäßes (10) welches die Werkstücke zur Behandlung aufnimmt; die Hohlwelle (14) erlaubt die Versorgung mit Flüssigkeit durch eine Wascheinrichtung, angeordnet am Ende der Welle, wobei die Hohlwelle (14) vertikal mit Hilfe eines Schlittens (24) positioniert ist, angeordnet auf dem kreisförmigen Aufbau, wobei die Hohlwelle (14) alternativ in eine vertikale Translationsbewegung versetzt wird; der Schlitten (24), welcher die Welle (14) trägt, kann sich auf einer Leitbahn (28) bewegen, welche diametral auf dem kreisförmigen Aufbau vorgesehen ist; der Kopf (20) sei mit Einrichtungen zur Behandlung der Werkstücke versehen, wobei diese Einrichtungen aus einer oder mehreren orientierbaren Spritzdüsen bestehen.

2. Ein Roboter nach Anspruch 1, **dadurch gekennzeichnet, daß** die Welle (14) einen teleskopischen Teil (16) beinhaltet, an dessen Ende der Kopf (20) montiert ist.

3. Ein Roboter nach Anspruch 1 oder 2, **dadurch gekennzeichnet, daß** die Spritzdüsen am Ende des Kopfes mit Hilfe eines Rotationsarmes (18) befestigt sind.

4. Ein Roboter nach einem der vorhergehenden Ansprüche, **dadurch gekennzeichnet, daß** der Arm (18) von einer Halterung (19) getragen wird, und **daß** er sich um eine vertikale Achse drehen kann.

5. Ein Roboter nach einem der vorhergehenden Ansprüche, **dadurch gekennzeichnet, daß** der Kopf (20) mit Hilfe einer Achse (22) am Ende des Armes (18) montiert ist die sich gemäß einer Rotationsbewegung um eine horizontale Achse drehen kann.

6. Ein Roboter gemäß einem der vorhergehenden Ansprüche, **dadurch gekennzeichnet, daß** die Dichtigkeit zwischen dem Schlitten (24) von dem die Welle (14) gehalten wird und dem unteren Teil dieser Welle ausgestattet mit dem Kopf (20) gesichert wird durch den Einsatz eine Vorhanges aus ineinanderschiebbaren Blechen.
